# EUROPEAN PATENT SPECIFICATION

(11) **EP 1 696 639 B1**
(45) Date of publication and mention of the grant of the patent: **30.12.2009**
(21) Application number: 06290241.6
(22) Date of filing: 08.02.2006
(51) Int. Cl.: H04L 29/14, H04L 12/24, H04J 3/16, H04L 1/00

(54) **Failure management and propagation in a telecommunication network**
Ausfallverwaltung und -ausbreitung in einem Telekommunikationsnetzwerk
Gestion et propagation de panne dans un réseau de télécommunication

(30) Priority: 18.02.2005 IT MI20050243
(43) Date of publication of application: 30.08.2006
(73) Proprietor: Alcatel Lucent, 75008 Paris (FR)
(72) Inventor: Busi, Italo, 20023 Cerro Maggiore (Milano) (IT); Vissers, Maarten, 1277 BE Huizen (NL); Villa, Paolo, 20049 Concorezzo (Milano) (IT)
(74) Representative: Schmidt, Werner Karl

(56) References cited:
- US-A1- 2003 058 106

## Description

The present invention generally relates to the telecommunication field and in particular to telecommunication systems transporting packets over a synchronous transport network. Still more in particular, the present invention relates to a method of managing and propagating failure indications in telecommunication systems transporting packets over a synchronous transport network using GFP encapsulation.

As it is known, in a packet-switched network, information is transmitted through packets. Examples of packet-switched networks are Ethernet networks, IP networks and ATM networks.

As it is also known, in a synchronous transport network information is transmitted as a continuous bit flow, which is carried by synchronous frames. Examples of synchronous transport networks are SDH networks, Sonet networks or Optical Transport Networks (OTN).

Synchronous transport networks are capable of supporting packet transmission. For instance, a synchronous transport network may support an Ethernet Private Line (EPL) service, namely a point-to-point interconnection between a first and a second Ethernet endpoints placed at the boundaries of an SDH network, without SDH bandwidth sharing, by transporting Ethernet packets from the first Ethernet endpoint to the second Ethernet endpoint, and *vice versa.* Besides, a synchronous transport network may transport packets from a first packet-switched local network to a second packet-switched local network, and *vice versa.*

For this purpose, packets must be encapsulated into synchronous frames before transmission over the synchronous transport network; similarly, packets must be de-encapsulated from synchronous frames after reception from the synchronous transport network. Thus, encapsulation and de-encapsulation functions belongs to an adaptation function between the transport layer (server) and the packet layer (client). In the following description, the term "adaptation function" will refer both to encapsulation and to de-encapsulation operations.

For instance, such an adaptation function may be the so-called GFP ("Generic Framing Procedure") encapsulation, as defined by International Telecommunication Union (ITU) in ITU-T G.7041/Y.1303 (12/2001). According to GFP encapsulation, packets (e.g. Ethernet packets, MPLS packets, RPR packets or the like) to be transported over a synchronous transport network are firstly encapsulated into GFP frames. Each GFP frame typically includes a GFP header and a GFP payload. The payload generally has a variable size, which is comprised between 4 bytes and 65535 bytes.

More particularly, the International Telecommunication Union (ITU) in ITU-T G.7041/Y.1303 (12/2001) defines two types of GFP encapsulation.

According to a first type of GFP encapsulation, which is called Frame-Mapped GFP (or GFP-F), each GFP frame comprises a single packet. Thus, the GFP payload size of a GFP frame depends on the packet size.

According to a second type of GFP encapsulation, which is called Transparent GFP (GFP-T), packets are split in characters (1 character = 8 or 10 bits). Sequences of characters are mapped into fixed-length GFP frames. Thus, in GFP-T, a GFP frame may comprise either more than one packet (if the GFP payload size is greater than the packet size) or a portion of a packet (if the GFP payload size is smaller that the packet size).

In both cases (either GFP-F or GFP-T), the GFP frames are carried over the synchronous transport network into synchronous frames (e.g. Virtual Containers (VCs) of an SDH network or into Virtual Tributaries of a SONET network or into Optical Channels of an OTN network). After transmission over the synchronous transport network, GFP frames are removed from the synchronous frames, and packets are de-encapsulated from GFP frames.

GFP frames may transport either packets or client management information. A GFP frame transporting client management information is generally termed CMF (Client Management Frame). A CMF frame may comprise different information for managing the transmission of client data. For instance, in case of a failure in a telecommunication system transporting packets on a synchronous transport network using GFP encapsulation, a CMF frame may carry a particular client management information, which is called Client Signal Failure (CSF) indication. In the following description, a CMF frame transporting a CSF indication will be briefly termed "CSF frame".

More particularly, according to ITU-T G.7041, upon detection of a failure, a GFP source adaptation process should generate a CSF frame. Two types of CSF frames are possible: "Loss of Client Signal" and "Loss of Client Character Synchronization". Upon detection of the CSF condition, a GFP client-specific source adaptation process should send CSF frames to the far-end GFP client-specific sink adaptation process once every 100 ms< T < 1000 ms, beginning at the next GFP frame. Upon reception of the CSF frame, the GFP client sink adaptation process declares a sink client signal failure. The GFP client-specific sink adaptation process should clear the defect condition either:
- after failing to receive N CSF frames in N X 1000ms, (a value of 3 is suggested for N) or
- upon receiving a valid GFP client data frame.

Handling of incomplete GFP frames at the onset of a CSF event should be consistent with the error handling procedures specified in clause 8.5 of ITU-T G.7041 for Transparent-Mapped GFP. The use of CSF with Frame-Mapped GFP is not described in ITU-T G.7041.

ITU-T G.7041 Amendment 1 specifies that when a frame-mapped GFP source adaptation process detects a CSF frame at ingress, the preferred action is to output the appropriate Client Signal Fail AIS if available. In the case where no client signal AIS is available it is possible to generate a CMF[csf] at the GFP-F source adaptation process it may send a CSF frame. ITU-T G.7041 Amendment 1 refers to Recommendations G.8021 and G.806 for further details of processing this signal and consequent action.

ITU-T G.806 describes a client-specific GFP-T source process. The input to the process, among other information, is a Loss of Signal (CSF_LOS) and Loss of Character Synchronization (CSF_LCS) indication from the server layer.

ITU-T G.806 Amendment 1 describes a client-specific GFP-F source process wherein, in the case where Client_SF and CSFEnable are true, GFP client management frames are inserted instead of GFP client data frames. These GFP client management frames have no payload information field. ITU-T G.806 Amendment 1 further describes a client-specific GFP-F sink process. Application specific CMF processes are not defined for GFP-F by ITU-T G.806 Amendment 1.

Presently, failure propagation is defined for GFP-T but it is applicable only when two Gbit-Ethernet access interfaces are provided. As far as GFP-F is concerned, a failure may be detected by Customer Layer 2 protocols that are rather time consuming. This results in a quite negative impact in the routing mechanisms.

As already mentioned, in a telecommunication system transporting packets over a synchronous transport network, an adaptation function is required between the transport layer (server) and the packet layer (client). Thus, for instance, in case of a telecommunication system providing an EPL service through GFP between two Ethernet endpoints, each Ethernet endpoint is connected to the synchronous transport network through a respective node (also indicated with network element) which is placed at the boundaries of an SDH network and which implements GFP adaptation functions. Each Ethernet endpoint is connected to its respective node by means of an Ethernet link.

Each Ethernet endpoint exchanges signalling and control information with the respective node by means of a mechanism which is called "Ethernet auto-negotiation". Ethernet auto-negotiation is defined by the by the IEEE Standard 802.3, Clause 28. Ethernet auto-negotiation is a known mechanism for providing the means to exchange information between two devices that share a link segment and to automatically configure both devices to take maximum advantage of their abilities.

Ethernet auto-negotiation consists in exchanging information between two nodes connected through a bi-directional Ethernet link. The exchanged information comprises: speed information, flow control, or single/full duplex information. In case of a failure on a bi-directional Ethernet link in one direction, Ethernet auto-negotiation shuts down and then restarts, thus forcing a failure condition of the Ethernet link also in the opposite direction. In other words, Ethernet auto-negotiation induces a one-directional failure of an Ethernet link to become a bi-directional failure.

This is a disadvantageous feature, especially in case of management and propagation of a one-directional failure in a GFP-based telecommunication system, as it will be shown herein after.

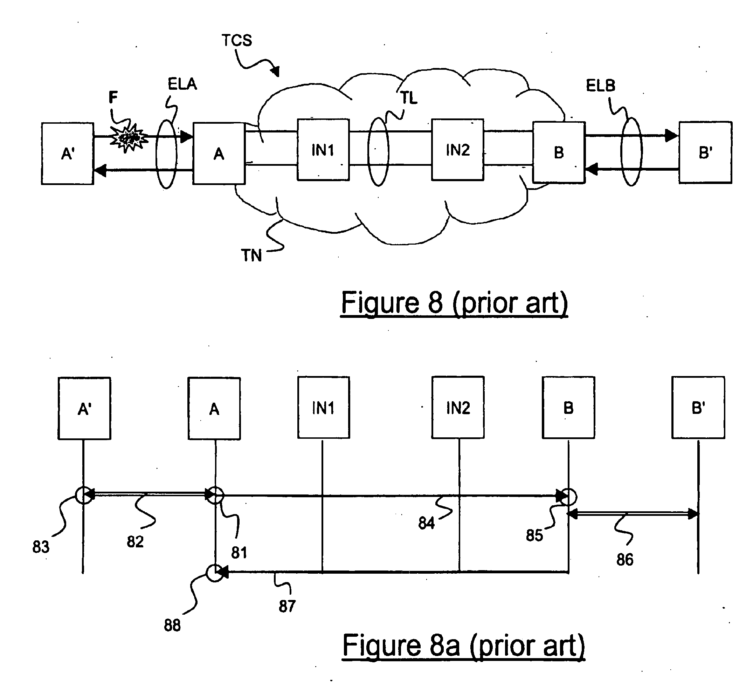

As it is known, both the above cited CSF frames and the Ethernet auto-negotiation participate in managing and propagating failures of a GFP-based telecommunication system. With reference to an exemplifying telecommunication system supporting an EPL service using GFP, which will be also shown and described in detail in Figure 8, Ethernet packets are transported between a first Ethernet endpoint and a second Ethernet endpoint. Connected to the first Ethernet endpoint through a first bi-directional Ethernet link is a first node, which performs GFP adaptation functions. Similarly, connected to the second Ethernet node through a second bi-directional Ethernet link is a second node, which performs GFP adaptation functions. The first and the second nodes are connected by means of a bi-directional transport link. Ethernet packets are transmitted by the first Ethernet endpoint through the first Ethernet link, they are encapsulated by the first node, they are transmitted along the bi-directional transport link, they are de-encapsulated by the second node and they are received by the second Ethernet endpoint. The same happens in the opposite direction.

In the following description and in the claims, the expression "incoming failure" will indicate a failure detected by a node in the incoming direction at one of its inputs. Besides, the expression "packet side" of a node implementing GFP adaptation functions will refer to the side of the node which is connected to an Ethernet endpoint or to a packet-switched local network. Similarly, the expression "transport side" of a node implementing GFP adaptation functions will refer to the side of the node which is connected to a synchronous transport network.

If a failure affects the first Ethernet link in the direction from the first Ethernet endpoint to the first node, the first node detects an incoming failure at its packet side. Thus, the Ethernet auto-negotiation between the first node and the first Ethernet endpoint shuts down and then restarts, thus forcing a failure condition on the first Ethernet link in the direction from the node to the Ethernet endpoint. At the same time, the first node starts sending CSF frames to the second node. The second node takes consequent actions in the outgoing direction at its packet side (typically, it switches off its transmitter(s) towards the second Ethernet endpoint). Therefore, Ethernet auto-negotiation between the second Ethernet endpoint and the second node shuts down. Ethernet auto-negotiation remains in a down state, as the second node has forced a switching-off of its transmitters. Thus, the second Ethernet endpoint then detects an incoming failure from the second node, and the second node detects an incoming failure at its packet side.

Consequently, the second node starts sending CSF frames to the first node. The first node receives the CSF frames and takes consequent actions in the outgoing direction at its packet side (typically, it switches off its transmitter(s) towards the first Ethernet endpoint). Therefore, Ethernet auto-negotiation between the first Ethernet endpoint and the first node remains in a down state, because the first node has forced a switching-off of its transmitters even when the failure is repaired.

Thus, according to the prior art, a network disadvantageously does not recover the normal operation after a failure has been removed. In fact, due to forced switching-off of transmitters, Ethernet auto-negotiation remains in a down state even after the failure has been removed.

Moreover, according to the prior art, an undesired loop of failure indications can be generated. In fact, after Ethernet auto-negotiation between the first Ethernet endpoint and the first node has shut down again and remains in a down state, the first node detects an incoming failure, thus starting to send CSF frames to the second node.

Moreover, the transmission of packets between the first and the second Ethernet endpoint is interrupted in both directions. In other words, in the prior art arrangements, the CSF frames (as defined into the previously cited ITU-T Recommendations) and the auto-negotiation force a one-directional failure to become a bi-directional failure.

Thus, one-directional failures in Ethernet links of a telecommunication system providing an EPL service are not satisfactorily managed according to the prior art.

Furthermore, prior art solutions do not cover the case of a one-directional failure of the transport link of a telecommunication system providing an EPL service. For instance, in case of a failure on the bidirectional transport link into the direction from the first node to the second node, according to the present solutions, the second node becomes informed about the failure but no mechanism is provided for Informing the first node (and the first Ethernet endpoint) about such a failure. In other words, when the second node detects an incoming failure at its transport side, it performs proper consequent actions in the outgoing direction on its packet side, so that only the second Ethernet endpoint becomes informed of the failure. The prior art does not consider any mechanism for informing the first transport node and the first Ethernet endpoint about the failure.

US 2003/0058106 discloses a mode of alarm transfer for use in a system for transmitting an encapsulated Ethernet signal between an Ethernet termination device connected to a terminal and an Ethernet termination device connected to a terminal being disposed opposite to each other. The Ethernet termination device detects notification form the Ethernet termination device regarding a link down between the terminal and the Ethernet termination device, or detects occurrence of a failure on a transmission path between the Ethernet termination device and the Ethernet termination device. When a link between the terminal and the Ethernet termination device is disconnected forcibly based on the detection, notification to the Ethernet termination device regarding the link down between the terminal and the Ethernet termination device is withheld

The main object of the present invention is providing a novel method for solving the prior art inconveniences.

In particular, an object of the present invention is providing a method of managing and propagating a failure wherein, when a failure is removed, nodes and Ethernet endpoints are able to detect more promptly when the failure is removed.

A further object of the present invention is providing a method of managing and propagating a failure wherein loops of failure indications are avoided.

The above and further objects are solved by a method according to claim 1, a telecommunication system according to claim 5 and a network element according to claim 11. Further advantageous features of the present invention are set forth in the respective dependent claims. All the claims are deemed to be an integral part of the present description.

The basic idea of the present invention consists in ignoring an incoming failure at a side of a node if a consequent action was previously taken in the outgoing direction at the same side of the node. Thus, when a node has switched off its transmitter(s) in the outgoing direction at one of its sides, and the node detects an incoming failure on the same side, this incoming failure is ignored. In this way, when the original failure is removed, the link will become more promptly restored.

According to an additional advantageous feature of the present invention, when a failure affects the bi-directional transport link in one direction only, a reverse link failure signal is sent back in the direction which is not affected by the failure. In this manner, the other side of the network is informed of the failure. Therefore, consequent actions could be taken. Preferably, said reverse link failure signal is a CSF frame.

The present invention will become fully clear after reading the following detailed description, given by way of example and not of limitation, to be read with reference to the attached figures. In the figures:
- Figure 1 shows a first scenario of a failure occurring in a telecommunication system supporting EPL service by means of GFP encapsulation;
- Figure 1a is a signaling diagram over time referred to Figure 1;
- Figure 2 shows a second scenario of a failure occurring in a telecommunication system supporting EPL service by means of GFP encapsulation;
- Figure 2a is a signaling diagram over time referred to Figure 2;
- Figure 3 shows a third scenario of a failure occurring in a telecommunication system supporting EPL service by means of GFP encapsulation;
- Figure 3a is a signaling diagram over time referred to Figure 3;
- Figure 4 shows a fourth scenario of a failure occurring in a telecommunication system supporting EPL service by means of GFP encapsulation;
- Figure 4a is a signaling diagram over time referred to Figure 4;
- Figure 5 shows a fifth scenario of a failure occurring in a telecommunication system supporting EPL service by means of GFP encapsulation;
- Figure 5a is a signaling diagram over time referred to Figure 5;
- Figure 6 shows a sixth scenario of a failure occurring in a telecommunication system comprising a transport network interfacing a LAN by means of GFP encapsulation;
- Figure 6a is a signaling diagram over time referred to Figure 6;
- Figure 7 shows a seventh scenario of a failure occurring in a telecommunication system comprising a transport network interfacing a LAN by means of GFP encapsulation;
- Figure 7a is a signaling diagram over time referred to Figure 7;
- Figure 8 shows a prior-art scenario of a failure occurring in a telecommunication system supporting EPL service by means of GFP encapsulation; and
- Figure 8a is a signaling diagram over time referred to Figure 8.

With reference first to Figures 8 and 8a, a scenario of a failure occurring in a telecommunication system supporting EPL service using GFP encapsulation according to the prior art is shown.

In particular, Figure 8 shows a telecommunication system TCS supporting an EPL service between a first Ethernet endpoint A' and a second Ethernet endpoint B'. The telecommunication system TCS comprises a synchronous transport network TN. The first Ethernet endpoint A' is connected to a first node A of the network TN through a bi-directional Ethernet link ELA. Similarly, the second Ethernet endpoint B' is connected to a second node B of the network TN through a bi-directional Ethernet link ELB. Both the links ELA and ELB support Ethernet auto-negotiation.

Both the first node A the second node B are adapted to perform GFP adaptation functions.

The first node A and the second node B are connected through a bi-directional transport link TL, which comprises a number of intermediate nodes; for simplicity, the transport link TL of Figure 8 only comprises two intermediate nodes IN1 and IN2.

Figure 8a shows a method of managing a failure F affecting the first Ethernet link ELA in the direction from the Ethernet endpoint A' to the node A in the telecommunication system TCS of Figure 8, according to the prior art.

When the failure F affects the Ethernet link ELA in the direction A'-A, the first node A detects (step 81) an incoming failure and Ethernet auto-negotiation between the A and A' shuts down and then restarts, thus forcing a failure condition on the link ELA into the direction A-A' (step 82). In this way, the first Ethernet endpoint A' is informed about the occurrence of the failure F (step 83). At the same time, the first node A starts sending CSF frames to the second node B (step 84). The second node B takes consequent actions in the outgoing direction at its packet side (step 85), which typically consist in switching off its transmitter(s) towards the second Ethernet endpoint B'. Thus, Ethernet auto-negotiation between B and B' shuts down, and it remains in a down state (step 86). Thus, the second Ethernet endpoint B' detects an incoming failure from B, and the second node B detects an incoming failure at its packet side. Thus, the second node B starts sending CSF frames to the first node A (step 87).

This results in the fact that the first node A performs consequent actions by switching off its transmitter(s) towards the first Ethernet endpoint A' (step 88). Then, Ethernet auto-negotiation between the first Ethernet endpoint A' and the first node A shuts down again and it remains in a down state (step 82). Thus, the first node A is not able to detect promptly when the original failure F is cleared.

The basic idea of the present invention is to modify the conditions under which a node detecting an incoming failure starts sending CSF frames. More in particular, according to the present invention, a node should not start sending CSF frames after detection of an incoming failure if such an incoming failure occurs at a side of such a node wherein such a node has already taken consequent actions in the outgoing direction. In other words, if a node has taken consequent actions in the outgoing direction at one of its sides, incoming failures at the same side must be ignored.

In addition, a node should start sending reverse link failure signals in the outgoing direction at its transport side when it detects an incoming failure of the transport link at its transport side. For instance, such an incoming failure may be detected through an SDH TSF, through a GFP LFD defect, through a GFP EXM defect or through a GFP UPM defect.

Besides, such a node does not send any reverse link failure signal in the outgoing direction at its transport side when it detects an incoming failure of an Ethernet link at its transport side. Such an incoming failure of an Ethernet link may be signalled by a CSF frame. In order to minimize the impacts on existing GFP solution, it is proposed to implement the reverse link failure signal by re-using CSF frames. However, a new special CSF frame could be defined.

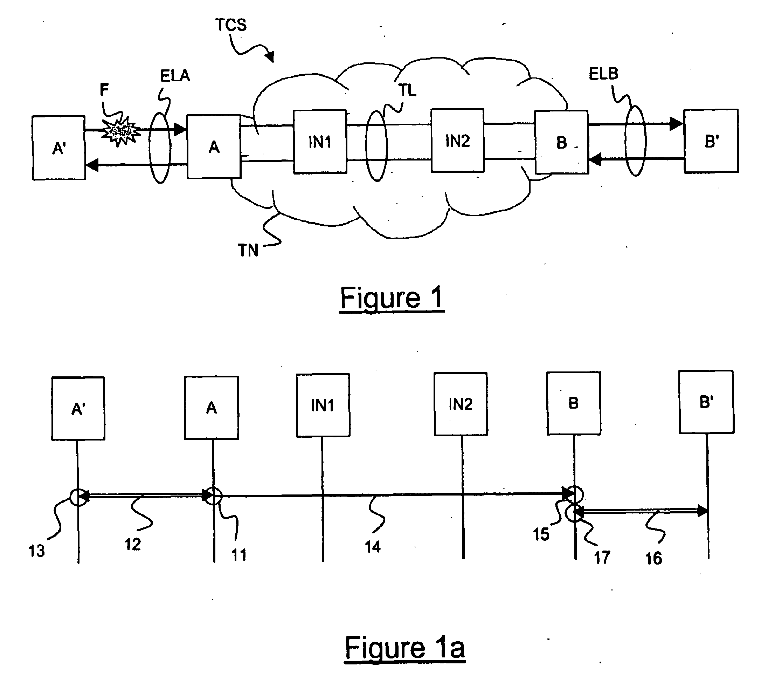

Figures 1 and 1 a show a first scenario where the present invention can profitably be implemented.

Figure 1 shows a telecommunication system TCS supporting an EPL service by means of GFP between a first Ethernet endpoint A' and a second Ethernet endpoint B'. For a better comprehension of Figure 1, reference can be made to the description of Figure 8.

Figure 1a shows a method of managing a failure F affecting the first Ethernet link ELA in the direction from the first Ethernet endpoint A' to the first node A in the telecommunication system of Figure 1, according to the present invention.

According to the present invention, when a failure F affects the first Ethernet link ELA in the direction A'-A, the first node A detects (step 11) an incoming failure at its packet side. As a consequence, Ethernet auto-negotiation between A and A' shuts down and then restarts, thus forcing a failure condition on the Ethernet link ELA in the direction A-A' (step 12). Thus, the first Ethernet endpoint A' becomes aware of the failure F (step 13). At the same time, the first node A starts sending CSF frames to the second node B (step 14). Thus, the second node B takes consequent actions in the outgoing direction on its packet side, for instance by switching off its transmitter(s) towards B' (step 15). Thus, Ethernet auto-negotiation between B and B' shuts down, and it remains in a down state (step 16). The second Ethernet endpoint B' thus detects an incoming failure, and the second node B detects an incoming failure at its packet side. According to the present invention, the second node B ignores such an incoming failure at its packet side (step 17), as it has already taken consequent actions in the outgoing direction of its packet side, during step 15. Thus, the second node B ignores all incoming failures , and consequently it does not send any CSF frame towards A.

Thus, the first node A is not forced to switch off its transmitter(s) towards A'. This advantageously results in the fact that Ethernet auto-negotiation between A and A' does not shut down again, so that a faster and more efficient restoring of the system normal operation is allowed.

In fact, profitably, when the failure F is removed (resulting in the restoration of first Ethernet link ELA in the A'-A direction), Ethernet auto-negotiation between A and A' restores the Ethernet link ELA in both directions. At the same time, the first node A will stop sending CSF frames to second node B. The second node B, in turn, stops taking any consequent actions; consequently, the Ethernet auto-negotiation between B and B' restarts, and the second Ethernet link ELB is restored in both directions.

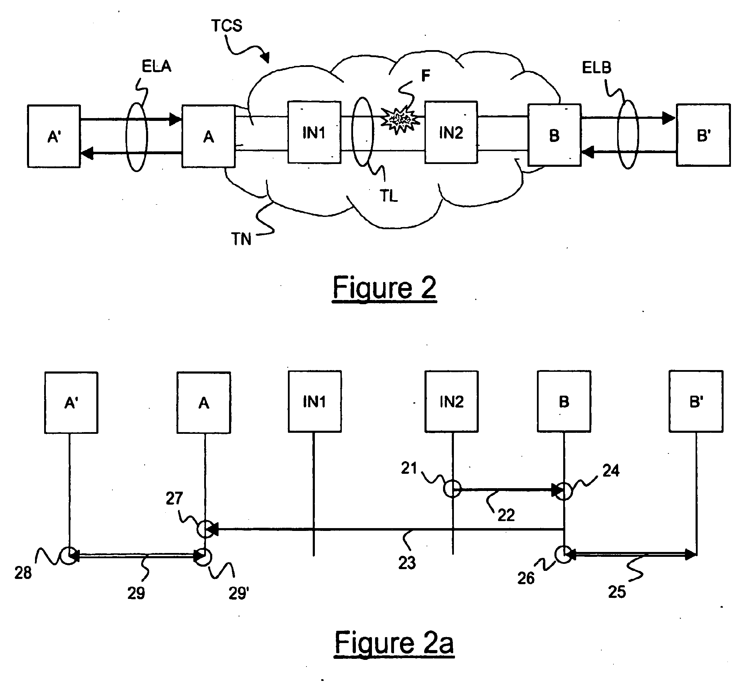

Figures 2 and 2a show a second scenario where the present invention can profitably be implemented. As the telecommunication system TCS is the same of Figure 1, a detailed description thereof will not be repeated.

In particular, Figure 2a shows a method of managing a failure F affecting the transport link TL in the direction from the first node A to the second node B according to the present invention. In particular, the failure F of Figure 2 occurs between the first intermediate node IN1 and the second intermediate node IN2.

According to the present invention, when the failure F occurs, the second intermediate node IN2 detects (step 21) the failure, and sends to the to second node B a failure indication (step 22). Such a failure indication may be, for instance, an SDH_AIS frame. However, any other failure indication, either standardized or proprietary, can be transmitted.

When the second node B detects an incoming failure on its transport side, it takes consequent actions (step 24) in the outgoing direction of its packet side; for instance, it switches off its transmitter(s) towards B'. At the same time, the second node B sends back a reverse link failure signal to the first node A (step 23). According to a preferred embodiment of the present invention, the reverse link failure signal is a CSF frame.

The consequent actions performed by the second node B during step 24 result in the fact that Ethernet auto-negotiation between B and B' shuts down, and it remains in a down state (step 25). Thus, the second node B detects an incoming failure at its packet side. However, according to the present invention, the second node B ignores any incoming failure (step 26) at its packet side.

Due to the reverse link failure signal received by the first node A, the first node A becomes aware of the failure F and takes consequent actions in the outgoing direction at its packet side (step 27). For instance, the first node A could switch off its transmitter(s) toward the first Ethernet endpoint A'. Thus, Ethernet auto-negotiation between A and A' shuts down, and it remains in a down state (step 28). Therefore, the first node A detects an incoming failure at its packet side (step 29). However, according to present invention, as A has already taken consequent actions in the outgoing direction at its packet side during step 27, A ignores such an incoming failure (step 29').

Therefore, when the failure F is removed, the intermediate node IN2 stops sending CSF frames to the second node B. In turn, the second node B stops sending reverse link failure signals to the first node A. Therefore, both the first node A and the second node B stop taking consequent actions, so that Ethernet auto-negotiation between A and A' and Ethernet auto-negotiation between B and B' restart, thus restoring the links ELA and ELB, respectively.

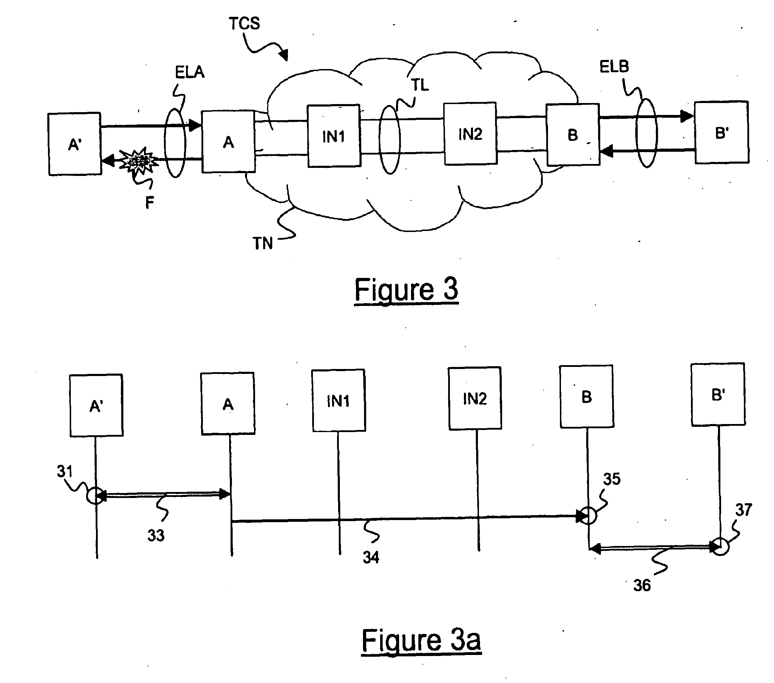

Figures 3 and 3a show a third scenario where the present invention can be profitably implemented. As the telecommunication system TCS is the same of Figure 1, a detailed description thereof will not be repeated.

In particular, Figure 3a shows a method of managing a failure F affecting the Ethernet link ELA in the direction from the first node A to the first Ethernet endpoint A' in the telecommunication system TCS of Figure 3, according to the present invention.

When the failure F occurs, the first Ethernet endpoint A' detects (step 31) an incoming failure. Ethernet auto-negotiation between A' and A shuts down and restarts, thus forcing a failure condition on the link ELA in the direction A'-A, so that the first node A detects an incoming failure at its packet side (step 33). Consequently, the first node A starts sending CSF frames to the second node B (step 34). The second node B then takes consequent actions into the outgoing direction at its packet side (step 35). For instance, the second node B may switch off its transmitter(s) towards B'. Then, Ethernet auto-negotiation between B and B' shuts down and it remains in a down state (step 36). Thus, B' detects an incoming failure from B, and B detects an incoming failure at its packet side. However, according to the present invention, as the second node B has already taken consequent action in the outgoing direction at its packet side during step 35, it ignores such an incoming failure, without performing any other action (step 37).

Profitably, when the failure F is removed, Ethernet auto-negotiation between A and A' restores the Ethernet link ELA in both directions. At the same time, the first node A stops sending CSF frames to the second node B. The second node B, in turn, stops taking any consequent actions in the outgoing direction at its packet side, so that Ethernet auto-negotiation between B and B' restarts, thus restoring the Ethernet link ELB in both directions.

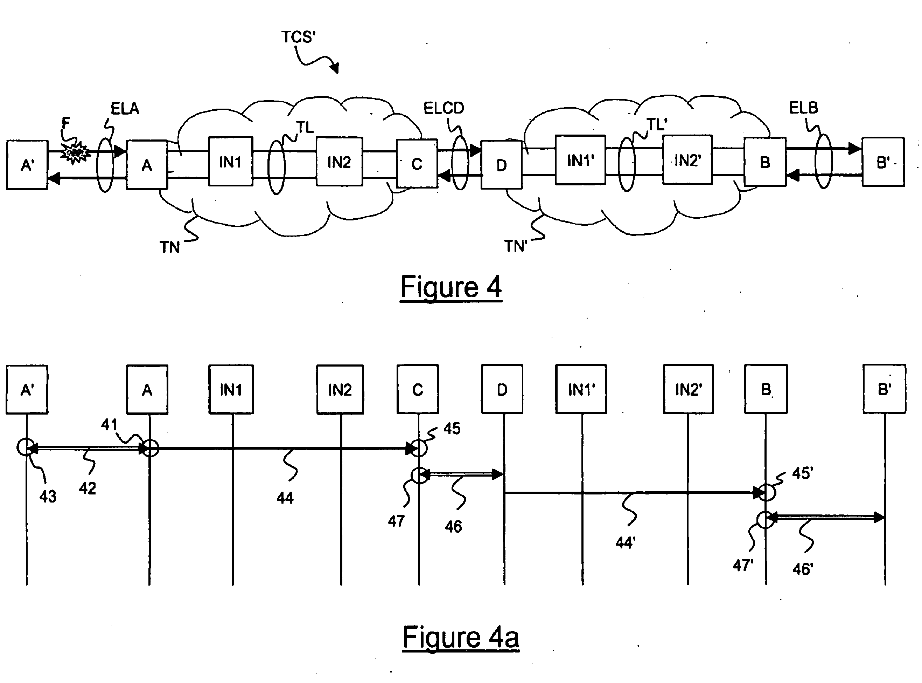

Figures 4 and 4a show a fourth scenario where the present invention can profitably be implemented.

Figure 4 shows a telecommunication system TCS' comprising two transport networks TN and TN' connected together though a third node C of the transport network TN and a fourth node D of the transport network TN'. Both nodes C and D support GFP adaptation functions. They are connected through a bi-directional Ethernet link ELCD, which supports Ethernet auto-negotiation between C and D. The cascade of the two networks TN and TN' supports an EPL service by means of GFP between a first Ethernet endpoint A' and a second Ethernet endpoint B'. The first Ethernet endpoint A' is connected to a first node A of the network TN by means of a bi-directional Ethernet link ELA. Similarly, the second Ethernet endpoint B' is connected to a second node B of the network TN' by means of a bi-directional Ethernet link ELB. Both links ELA and ELB support Ethernet auto-negotiation between A and A', and auto-negotiation between B and B', respectively.

Figure 4a shows a method of managing a failure F affecting the Ethernet link ELA in the direction from the first Ethernet endpoint A' to the first node A in the telecommunication system TCS' of Figure 4, according to the present invention.

According to the present invention, when a failure F affects the Ethernet link ELA in the direction A'-A, the first node A detects (step 41) an incoming failure at its packet side. Consequently, Ethernet auto-negotiation between A' and A shuts down and restarts, thus forcing a failure condition on the link ELA also in the direction A-A' (step 42). Thus, the first Ethernet endpoint A' becomes aware of the failure F (step 43). At the same time, the first node A starts sending CSF frames to the third node C (step 44). Upon receiving the CSF frames, the third node C takes consequent actions in the outgoing direction towards the fourth node D (step 45). Such consequent actions may include switching off its transmitter(s) towards D. Thus, Ethernet auto-negotiation between the third node C and the fourth node D shuts downs, and it remains in a down state. Thus, the fourth node D detects an incoming failure from C, and the third node C detects an incoming failure from D (step 46). However, according to the present invention, the third node C ignores such an incoming failure, as it has already taken consequent actions in the outgoing direction towards D during step 45 (step 47).

Besides, as the fourth node D has detected an incoming failure from C, it starts sending CSF frames to the second node B (step 44'). Upon receiving the CSF frames, the second node B takes consequent actions in the outgoing direction at its packet side (step 45'). Such consequent actions may include switching off its transmitter(s) towards B'. Thus, Ethernet auto-negotiation between B and B' shuts down, and it remains in a down state. Therefore, the Ethernet endpoint B' detects an incoming failure, and the second node B detects an incoming failure at its packet side (step 46'). However, according to the present invention, the transport node B ignores such an incoming failure, as it has already taken consequently actions in the outgoing direction at its packet side during step 45' (step 47').

Profitably, when the failure F is removed, Ethernet auto-negotiation between A and A' restores the link ELA in both directions. At the same time, the first node A stops sending CSF frames to the third node C, so that the third node C stops taking consequent actions. Then, Ethernet auto-negotiation between C and D restarts, thus restoring the link ELCD in both directions. Thus, the fourth node D stops sending CSF frames to the second node B, so that the second node B stops taking consequent actions. Thus, Ethernet auto-negotiation between B and B' restarts, thus restoring the link ELB in both directions.

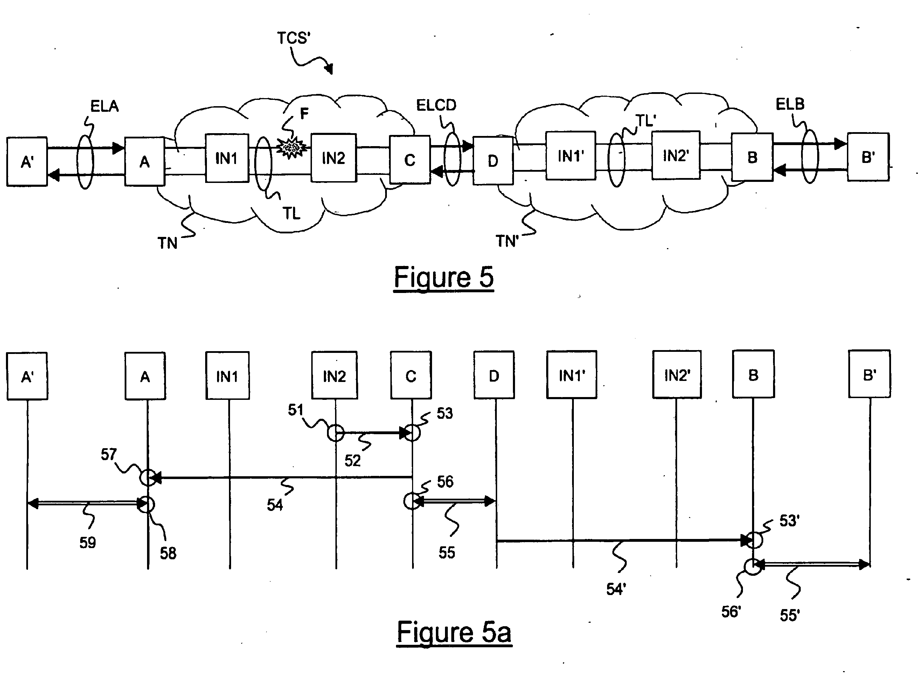

Figures 5 and 5a show a fifth scenario where the present invention can be profitably implemented. The telecommunication system TCS' is the same as that of Figure 4 and thus a detailed description will not be repeated.

Figure 5a shows a method of managing a failure F affecting the transport link TL in the direction from the first node A to the third node C in the telecommunication system TCS' of Figure 5, according to the present invention. In particular, the failure F occurs between the first and the second intermediate nodes IN1 and IN2.

When the failure F occurs, the second intermediate node IN2 detects an incoming failure (step 51), and then starts sending to the third node C a failure indication (step 52). Such a failure indication could be an SDH_AIS. Any other failure indication, either known or not, can be employed.

When the third node C receives the failure indication, it takes consequent actions in the outgoing direction towards the fourth node D (step 53). For instance, the third node C could switch off its transmitter(s) toward D. At the same time, according to the present invention, the third node C starts sending reverse link failure signals to first node A (step 54). According to a preferred embodiment of the present invention, each reverse link failure signal is a CSF frame.

Thus, the first node A takes consequent actions in the outgoing direction at its packet side (step 58). For instance, the first node A may switch off its transmitter(s) toward A'. Thus, Ethernet auto-negotiation between A' and A shuts down, and it remains in a down state (step 59). Thus, the first node A detects an incoming failure at its packet side. However, as it has already taken consequent actions in the outgoing direction at its packet side during step 58, the first node A ignores such an incoming failure, and it does not perform any other action.

The consequent actions performed by the third node C during step 53 results in the fact that Ethernet auto-negotiation between C and D shuts down, and it remains in a down state. Thus, the fourth node D detects an incoming failure from C, and the third node C detects an incoming failure from D. However, according to the present invention, the third node C ignores such an incoming failure (step 56).

The fourth node D, after detecting the incoming failure from C, starts sending CSF frames to the second node B (step 54'). Consequently, the second node B takes consequent action in the outgoing direction at its packet side (step 53'). For instance, the second node B could switch off its transmitter(s) towards B'. Thus, Ethernet auto-negotiation between B and B' shuts down, and it remains in a down state step 55'). Therefore, the second Ethernet endpoint B' detects an incoming failure from B, and the second node B detects an incoming failure at its packet side. However, according to the present invention, the second node B ignores such an incoming failure, as it has already performed consequent actions in the outgoing direction at its packet side.

Therefore, when the failure F is removed, the intermediate node IN2 stops sending failure indications to the third node C, so that C stops sending CSF reverse link failure signals to the first node A. Thus, auto-negotiation between A' and A restores the link ELA in both directions. At the same time, the third node C stops taking consequent actions, so that Ethernet auto-negotiation between C and D restarts, thus restoring the link ELCD in both directions. Then, the fourth node D stops sending CSF frames to the second node B, so that B stops taking consequent actions. Thus, Ethernet auto-negotiation between B' and B restarts, thus restoring the link ELB in both directions.

In the above described exemplary applications of the present invention (Figures 1-5), the method of managing and propagating a failure according to the present invention is applied to telecommunication systems supporting EPL service by means of GFP encapsulation. However, the method of the invention may have other applications.

For instance, the method of the invention could be applied to a telecommunication system comprising a multi-service transport network (i.e. a network comprising both synchronous sub-networks and packet-switched sub-networks) connecting two or more packet-switched nodes using synchronous frames by means of suitable Network-Network Interfaces (NNI) performing GFP adaptation functions.

Similarly, the method of the invention could be applied to a telecommunication system comprising a synchronous transport network connecting an Ethernet endpoint to a packet-switched network, wherein the synchronous transport network interfaces with each packet-switched network by means of suitable Network-Network Interfaces (NNI) performing GFP adaptation functions.

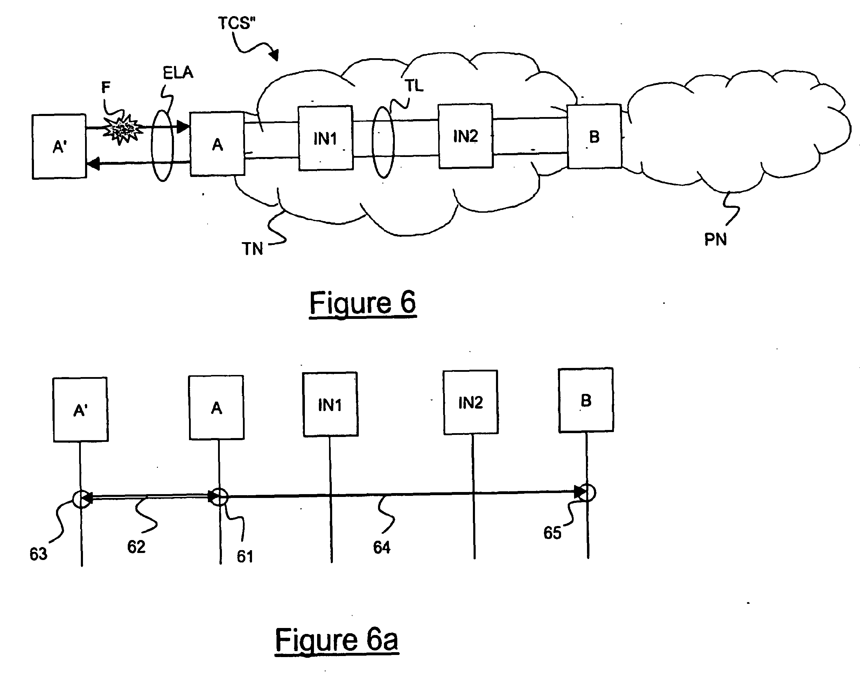

For instance, Figures 6 and 6a show a sixth scenario where the present invention can be profitably implemented.

Figure 6 shows a telecommunication system TCS" comprising a synchronous transport network TN which is connected to a packet-switched network PN (for instance an Ethernet bridge network, a MPLS network) by means of a Network-Network Interface NNI. Node B at NNI interface performs GFP adaptation functions.

The transport network TN comprises a bi-directional transport link TL connecting the node B to a node A. The node A is connected, by means of a bi-directional Ethernet link ELA, to an Ethernet endpoint A'. The Ethernet link ELA supports Ethernet auto-negotiation between A' and A. Further, the transport link TL of Figure 6 comprises two intermediate nodes IN1, IN2.

Figure 6a shows a method of managing a failure F affecting the Ethernet link ELA in the direction from the Ethernet node A' to the node A in the telecommunication system TCS" of Figure 6, according to the present invention.

When the failure F occurs, the node A detects (step 61) an incoming failure at its packet side. Thus, Ethernet auto-negotiation between A' and A shuts down and restarts, thus forcing a failure condition on the link ELA in the direction A'-A (step 62), so that the Ethernet endpoint A' is informed about the failure F (step 63). At the same time, the node A starts sending CSF frames to the NNI interface (step 64)

As the node B (at NNI interface) detects the incoming failure at its transport side, it takes consequent actions in the outgoing direction on its packet side (step 65). Such consequent actions depends on the type of packet-switched network PN. For instance, node B may perform an Ethernet or MPLS AIS insertion, an xSTP topology change, a MPLS rerouting or a MPLS fast rerouting. It is important to notice that, according to the invention, if consequent actions taken by node B (at NNI interface) induce the node B at NNI interface to detect an incoming failure at its packet side, such an incoming failure is ignored, so that the node B at NNI interface does not start sending any CSF frame to the node A.

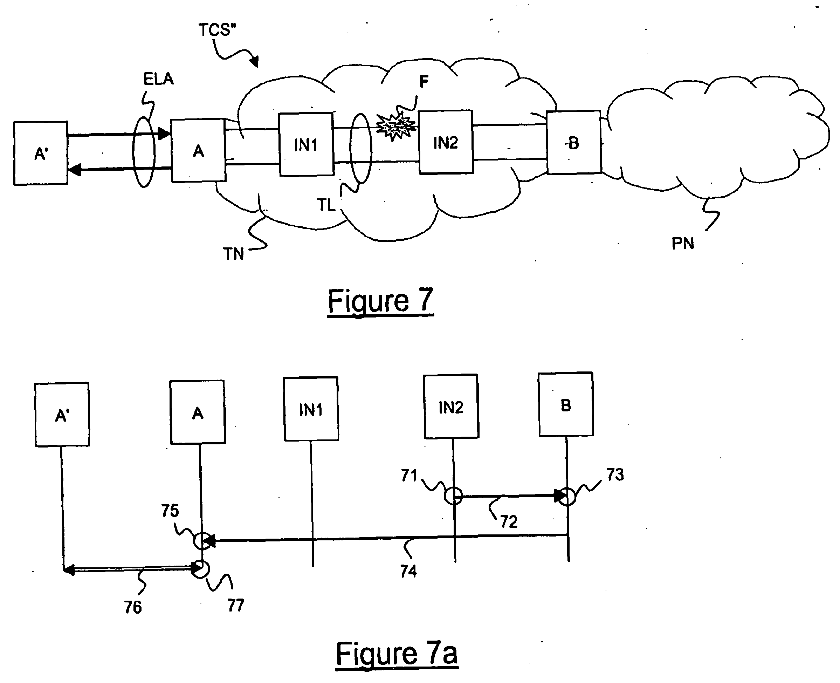

Figures 7 and 7a show a seventh scenario where the present invention can be profitably implemented. The telecommunication system is as that of Figure 6 and thus a detailed description will not be repeated.

Figure 7a shows a method of managing a failure F affecting the transport link TL in the direction from the first node A to the NNI interface in the telecommunication system TCS" of Figure 7, according to the present invention. In particular, the failure F occurs between the first and the second intermediate nodes IN1 and IN2.

When the failure F occurs, the intermediate node IN2 detects an incoming failure(step 71), and consequently starts sending failure indications to the node B (at NNI interface) (step 72). Such failure indications may be for instance SDH AIS frames. As the node B at NNI interface detects an incoming failure from IN2, it takes consequent actions (step 73) in the outgoing direction at its packet side. Such consequent actions depends on the type of packet network . For instance, node B at NNI may perform an Ethernet or MPLS AIS insertion, an xSTP topology change, a MPLS rerouting or a MPLS fast rerouting. It is important to notice that, according to the invention, if consequent actions taken by node B at NNI interface induce the node B at NNI interface to detect an incoming failure at its packet side, such an incoming failure is ignored, so that the node B at NNI interface does not start sending any CSF frame to the node A.

At the same time, the node B at NNI interface starts sending reverse link failure signals to the node A (step 74). For instance, such reverse link failure signals may be CSF frames. Upon reception of the reverse link failure signals, the node A takes consequent actions in the outgoing direction at its packet side (step 75). For instance, the node A may switch off its transmitter(s) towards A'. Thus the Ethernet auto-negotiation between A and A' shuts down, so that the endpoint A' is informed of the failure F and the node A detects an incoming failure at its packet side. However, according to the invention, the node A ignores such an incoming failure (step 77), without performing any other action.

## Claims

1. A method of managing and propagating a failure indication in a telecommunication system (TCS), said telecommunication system (TCS) comprising at least a synchronous transport network (TN) and a packet-switched network (A', B', PN) which is connected to the synchronous transport network by means of a node (A, B), said node having a transport side towards the synchronous transport network and a packet side towards the packet-switched network, wherein the method comprises the following steps, which are performed by said node (A, B):
a) detecting a first failure at the transport side;
b) performing consequent actions in the output direction at the packet side by switching off transmitter(s) of said node (A, B) on said packet side;
c) detecting at the packet side a second failure which is caused by said consequent actions; and
d) ignoring the second failure at said packet side, as said consequent actions have already been taken in said output direction of said packet side, during said step b).

2. The method according to claim 1, wherein it further comprises the step of sending a failure indication towards the synchronous transport network (TN), after the step of detecting a first failure, if the first failure is a failure occurred in the synchronous transport network (TN).

3. The method according to any of the preceding claims, wherein the second failure is generated by an auto-negotiation mechanism as a consequence of the consequent actions.

4. The method according to claim 2, wherein said failure indication is sent using a Generic Framing Procedure frame carrying a Client Signal Failure indication.

5. A telecommunication system (TCS) comprising:
- a synchronous transport network (TN);
- a packet-switched network (A', B', PN);
- a node (A, B) connecting the synchronous transport network (TN) and the packet-switched network (A', B', PN), the node being (A, B) adapted to perform an adaptation function between the synchronous transport network (TN) and the packet-switched network (A', B', PN), said node (A, B) having a transport side and a packet side;
wherein said node (A, B) comprises a device for:
- detecting a first failure at the transport side;
- performing consequent actions in the output direction at the packet side by switching off transmitter(s) of said node (A, B) on said packet side;
- detecting at the packet side a second failure which is caused by said consequent actions; and
- ignoring the second failure at said packet side, as said consequent actions have already been taken in said output direction of said packet side.

6. The telecommunication system (TCS) according to claim 5, wherein the device is adapted to send a failure indication towards the synchronous transport network (TN), upon detection of the first failure, if the first failure is a failure occurred in the synchronous transport network (TN).

7. The telecommunication system (TCS) according to any of claims 5 - 6, wherein the adaptation function is a General Framing Procedure encapsulation function.

8. The telecommunication system (TCS) according to any of claims 5 - 7, wherein the packet-switched network (A', B', PN) comprises a single endpoint (A', B').

9. A telecommunication system (TCS) according to claim 8, wherein said single endpoint (A', B') communicates with said node (A, B) by means of an auto-negotiation mechanism.

10. The telecommunication system (TCS) according to claims 5 and 6, wherein said failure indication is sent using a Generic Framing Procedure frame carrying a Client Signal Failure indication.

11. A network element (B) including a device adapted to connect a synchronous transport network (TN) and a packet-switched network (A', B', PN), the device including:
- a transport side receiver adapted to detect a first failure from the synchronous transport network;
- a packet side transmitter adapted to perform consequent actions towards the packet-switched network by switching off;
- a packet side receiver adapted to detect a second failure from the packet-switched network, wherein the second failure is caused by said consequent actions;
- a transport side transmitter adapted to ignore the second failure at said packet side, as said consequent actions have already been taken in said output direction of said packet side by said packet side transmitter.

12. The network element according to claim 11, wherein the transport side transmitter is adapted to send a failure indication towards the synchronous transport network if the first failure is a failure occurred in the synchronous transport network.

13. The network element according to claim 12, wherein said failure indication is sent using a Generic Framing Procedure frame carrying a Client Signal Failure indication.

## Patentansprüche

1. Ein Verfahren zur Verwaltung und Verbreitung einer Störanzeige in einem Telekommunikationssystem (TCS), wobei das besagte Telekommunikationssystem (TCS) mindestens ein synchrones Transportnetzwerk (TN) und ein paketvermitteltes Netzwerk (A', B', PN), welches über einen Knoten (A, B) an das synchrone Transportnetzwerk angeschlossen ist, umfasst, wobei der besagte Knoten eine Transportseite in Richtung des synchronen Transportnetzwerks und eine Paketseite In Richtung des paketvermittelten Netzwerks aufweist, wobei das Verfahren die folgenden Schritte, welche von dem besagten Knoten (A, B) ausgeführt werden, umfasst:
a) Erkennen einer ersten Störung an der Transportseite;
b) Durchführen von entsprechenden Maßnahmen in der Ausgangsrichtung an der Paketseite durch Abschalten der/des Sender(s) des besagten Knotens (A, B) an der Paketseite;
c) Erkennen, an der Paketseite, einer zweiten Störung, welche von den besagten entsprechenden Maßnahmen verursacht wurde; und
d) Ignorieren der besagten zweiten Störung an der besagten Paketseite, da die besagten entsprechenden Maßnahmen in der besagten Ausgangsrichtung der besagten Paketseite schon in dem besagten Schritt b) getroffen wurden.

2. Das Verfahren nach Anspruch 1, wobei es weiterhin den Schritt des Sendens einer Störungsanzeige an das synchrone Transportnetzwerk (TN) nach Ausführen des Schrittes des Erkennens einer ersten Störung umfasst, wenn die erste Störung eine im synchronen Transportnetzwerk (TN) aufgetretene Störung ist.

3. Das Verfahren nach einem beliebigen der vorstehenden Ansprüche, wobei die zweite Störung von einem Auto-Negotiation-Mechanismus als Folge der entsprechenden Maßnahmen erzeugt wird.

4. Das Verfahren nach Anspruch 2, wobei die besagte Störungsanzeige unter Verwendung eines allgemeinen Framing-Prozess-Rahmens, welcher eine Clientsignal-Störungsanzeige transportiert, gesendet wird.

5. Ein Telekommunikationssystem (TCS), umfassend:
- Ein synchrones Transportnetzwerk (TN);
- ein paketvermitteltes Netzwerk (A', B', PN);
- einen Knoten (A, B), welcher das synchrone Transportnetzwerk (TN) mit dem paketvermittelten Netzwerk (A', B', PN) verbindet, wobei der Knoten (A, B) dazu ausgelegt Ist, eine Anpassungsfunktion zwischen dem synchronen Transportnetzwerk (TN) und dem paketvermittelten Netzwerk (A', B', PN) auszuführen, wobei der besagte Knoten (A, B) eine Transportseite und eine Paketseite aufweist;
wobei der besagte Knoten (A, B) eine Vorrichtung zum:
- Erkennen einer ersten Störung an der Transportseite; durchführen von entsprechenden Maßnahmen in der Ausgangsrichtung an de Paketseite durch Abschalten der/des Sender(s) des besagten Knotens (A, B) an der besagten Paketseite;
- Erkennen, an der Paketseite, einer zweiten Störung, welche von den besagten entsprechenden Maßnahmen verursacht wurde; und
- ignorieren der zweiten Störung an der besagten Paketseite, da die besagten entsprechenden Maßnahmen in der besagten Ausgangsrichtung der besagten Paketseite schon getroffen wurden,
umfasst.

6. Das Telekommunlkationssystem (TCS) nach Anspruch 5, wobei die Vorrichtung dazu ausgelegt ist, nach Erkennen der ersten Störung eine Störungsanzeige an das synchrone Transportnetzwerk (TN) zu senden, wenn die erste Störung im synchronen Transportnetzwerk (TN) aufgetreten ist.

7. Das Telekommunikationssystem (TCS) nach einem beliebigen der Ansprüche 5 - 6, wobei die Anpassungsfunktion eine allgemeine Framing-Prozess-Verkapselungsfunktion ist.

8. Das Telekommunikationssystem (TCS) nach einem beliebigen der Ansprüche 5 - 7, wobei das paketvermittelte Netzwerk (A', B', PN) einen einzelnen Endpunkt (A', B') umfasst.

9. Ein Telekommunikationssystem (TCS) nach Anspruch 8, wobei der besagte einzelne Endpunkt (A', B') über einen Auto-Negotiaton-Mechanismus mit dem besagten Knoten (A, B) kommuniziert.

10. Das Telekommunikationssystem (TCS) nach Anspruch 5 und 6, wobei die besagte Störungsanzeige unter Verwendung eines allgemeinen Framing-Prozess-Rahmens, welcher eine Clientsignal-Störungsanzeige transportiert, gesendet wird.

11. Ein Netzwerkelement (B) mit einer Vorrichtung, die dazu ausgelegt ist, ein synchrones Transportnetzwerk (TN) mit einem paketvermittelten Netzwerk (A', B', PN) zu verbinden, wobei die Vorrichtung umfasst:
- Einen transportseitigen Empfänger, der dazu ausgelegt ist, eine erste Störung von dem synchronen Transportnetzwerk zu erkennen;
- einen paketseitigen Sender, der dazu ausgelegt ist, entsprechende Maßnahmen in Richtung des paketvermittelten Netzwerks durch Abschalten durchzuführen;
- einen paketseitigen Empfänger, der dazu ausgelegt ist, eine zweite Störung von dem paketvermittelten Netzwerk zu erkennen, wobei die zweite Störung von den besagten entsprechenden Maßnahmen verursacht wurde;
- einen transportseitigen Sender, der dazu ausgelegt ist, die zweite Störung an der besagten Paketseite zu ignorieren, da die besagten entsprechenden Maßnahmen in der besagten Ausgangsrichtung der besagten Paketseite schon von dem besagten paketseitigen Sender durchgeführt wurden.

12. Das Netzwerkelement nach Anspruch 11, wobei der transportseitige Sender dazu ausgelegt ist, eine Störungsanzeige an das synchrone Transportnetzwerk zu senden, wenn die erste Störung eine im synchronen Transportnetzwerk aufgetretene Störung ist.

13. Das Netzwerkelement nach Anspruch 12, wobei die besagte Störungsanzeige unter Verwendung eines allgemeinen Framing-Prozess-Rahmens, welcher eine Clientsignal-Störungsanzeige transportiert, gesendet wird.

## Revendications

1. Procédé de gestion et de propagation d'une indication de défaillance dans un système de télécommunication (TCS), ledit système de télécommunication (TCS) comprenant au moins un réseau de transport synchrone (TN) et un réseau à commutation de paquets (A', B', PN) qui est connecté au réseau de transport synchrone au moyen d'un noeud (A, B), ledit noeud ayant un côté transport vers le réseau de transport synchrone et un côté paquets vers le réseau à commutation de paquets, le procédé comprenant les étapes suivantes, lesquelles sont exécutées par ledit noeud (A, B) :
a) détecter une première défaillance du côté transport ;
b) accomplir les actions conséquentes dans le sens de sortie sur le côté paquets en arrêtant le(s) émetteur(s) dudit noeud (A, B) sur ledit côté paquets ;
c) détecter, du côté paquets, une deuxième défaillance qui est provoquée par lesdites actions conséquentes : et
d) ignorer la deuxième défaillance sur ledit côté paquets, puisque lesdites actions conséquentes ont déjà été prises dans ledit sens de sortie dudit côté paquets, au cours de ladite étape b).

2. Procédé selon la revendication 1, celui-ci comprenant en outre l'étape d'émission d'une indication de défaillance en direction du réseau de transport synchrone (TN), après l'étape de détection d'une première défaillance, si la première défaillance est une défaillance qui a eu lieu dans le réseau de transport synchrone (TN).

3. Procédé selon l'une quelconque des revendications précédentes, la deuxième défaillance étant générée par un mécanisme d'auto-négociation en conséquence des actions conséquentes.

4. Procédé selon la revendication 2, dans lequel ladite indication de défaillance est envoyée au moyen d'une trame par procédure GFP (procédure de mise en trame générale) transportant une indication de défaillance de signal client.

5. Système de télécommunications (TCS) comprenant :
- un réseau de transport synchrone (TN) ;
- un réseau à commutation de paquets (A', B', PN) ;
- un noeud (A, B) qui relie le réseau de transport synchrone (TN) et le réseau à commutation de paquets (A', B', PN), le noeud (A, B) étant adapté pour réaliser une fonction d'adaptation entre le réseau de transport synchrone (TN) et le réseau à commutation de paquets (A', B', PN), ledit noeud (A, B) ayant un côté transport et un côté paquets ;
ledit noeud (A, B) comprenant un dispositif pour :
- détecter une première défaillance du côté transport ;
- accomplir les actions conséquentes dans le sens de sortie sur le côté paquets en arrêtant le(s) émetteur(s) dudit noeud (A, B) sur ledit côté paquets ;
- détecter, du côté paquets, une deuxième défaillance qui est provoquée par lesdites actions conséquentes ; et
- ignorer la deuxième défaillance sur ledit côté paquets, puisque lesdites actions conséquentes ont déjà été prises dans ledit sens de sortie dudit côté paquets.

6. Système de télécommunication (TCS) selon la revendication 5, le dispositif étant adapté pour émettre une indication de défaillance en direction du réseau de transport synchrone (TN), sur détection de la première défaillance, si la première défaillance est une défaillance qui a eu lieu dans le réseau de transport synchrone (TN).

7. Système de télécommunication (TCS) selon l'une quelconque des revendications 5 - 6, la fonction d'adaptation étant une fonction d'encapsulation par procédure GFP (procédure de mise en trame générale).

8. Système de télécommunication (TCS) selon l'une quelconque des revendications 5 - 7, le réseau à commutation de paquets (A', B', PN) comprenant un point de terminaison unique (A', B').

9. Système de télécommunication (TCS) selon la revendication 8, ledit point de terminaison unique (A', B') communiquant avec ledit noeud (A, B) au moyen d'un mécanisme d'auto-négociation.

10. Système de télécommunication (TCS) selon les revendications 5 et 6, dans lequel ladite indication de défaillance est envoyée au moyen d'une trame par procédure GFP (procédure de mise en trame générale) transportant une indication de défaillance de signal client.

11. Élément de réseau (B) comprenant un dispositif adapté pour connecter un réseau de transport synchrone (TN) et un réseau à commutation de paquets (A', B', PN), le dispositif comprenant :
- un récepteur du côté transport adapté pour détecter une première défaillance de la part du réseau de transport synchrone ;
- un émetteur du côté paquets adapté pour accomplir des actions conséquentes en direction du réseau à commutation de paquets en s'arrêtant ;
- un récepteur du côté paquets adapté pour détecter une deuxième défaillance de la part du réseau à commutation de paquets, la deuxième défaillance étant provoquée par lesdites actions conséquentes ;
- un émetteur du côté transport adapté pour ignorer la deuxième défaillance sur ledit côté paquets, puisque lesdites actions conséquentes ont déjà été prises dans ledit sens de sortie dudit côté paquets par ledit émetteur du côté paquets.

12. Élément de réseau selon la revendication 11, l'émetteur côté transport étant adapté pour émettre une indication de défaillance en direction du réseau de transport synchrone si la première défaillance est une défaillance qui a eu lieu dans le réseau de transport synchrone.

13. Élément de réseau selon la revendication 12, dans lequel ladite indication de défaillance est envoyée au moyen d'une trame par procédure GFP (procédure de mise en trame générale) transportant une indication de défaillance de signal client.
